# FASCICULE DE BREVET EUROPEEN

(11) **EP 2 935 909 B1**
(45) Date de publication et mention de la délivrance du brevet: **31.01.2018**
(21) Numéro de dépôt: 13805883.9
(22) Date de dépôt: 16.12.2013
(51) Int. Cl.: F16B 5/02, F16B 33/00, F16B 37/12

(54) **CLAPET D'ETANCHEITE POUR SYSTEME DE FIXATION**
DICHTUNGSVENTIL FÜR EIN BEFESTIGUNGSSYSTEM
SEALING VALVE FOR AN ATTACHMENT SYSTEM

(30) Priorité: 19.12.2012 FR 1203476
(43) Date de publication de la demande: 28.10.2015
(73) Titulaire: THALES, 92400 Courbevoie (FR)
(72) Inventeur: BORRAT-MICHAUD, Pierre, 49309 Cholet (FR); RETAILLEAU, Xavier, 49309 Cholet (FR); JOUET, Pierre, 49309 Cholet (FR)
(74) Mandataire: Dudouit, Isabelle
(86) Numéro de dépôt international: PCT/EP2013/076769
(87) Numéro de publication internationale: WO 2014/095764

(56) Documents cités:
- EP-A1- 0 310 775
- EP-A1- 0 529 172
- WO-A1-2011/144877
- FR-A1- 2 544 029
- US-A- 2 133 409

## Description

L'objet de l'invention concerne un dispositif de protection étanche pour un système de fixation ou clapet d'étanchéité. L'invention peut être utilisée dans tous les domaines où un moyen de fixation vient s'insérer dans un orifice pour maintenir en place un objet. Elle concerne la protection des systèmes vissés, dans l'industrie automobile, aéronautique ou toute autre industrie. Elle trouve aussi son application dans le domaine de la connectique, par exemple pour fixer un connecteur sur un appareil.

L'un des problèmes rencontrés lorsque l'on cherche à fixer un élément par rapport à un autre au moyen d'une vis, par exemple, est de s'assurer que l'orifice dans lequel la vis va s'insérer est propre et que l'ensemble restera étanche lorsqu'il est disposé dans un environnement peu propre, qu'il est soumis à la poussière, à l'eau etc.

Un autre souci est de disposer d'un moyen de fixation étanche qui soit efficace opérationnellement.

Actuellement, lorsqu'il y a des dépôts dans les systèmes de fixation, un opérateur enlève les éléments incrustés dans les systèmes de fixation. Une autre solution consiste à positionner un capuchon d'étanchéité qui est fixé avec une cordelette afin de ne pas l'égarer. Dans cette solution, il y a un risque de perdre ou d'oublier le capuchon. De plus, la présence de ce capuchon peut diminuer l'ergonomie du produit, conduire à augmenter la taille du dispositif devenant alors plus encombrant.

La demande de brevet EP 0 529 172 décrit un élément de fixation destiné à fixer un premier élément à un deuxième élément qui n'est pas étanche.

L'invention concerne un élément de protection ou clapet d'étanchéité destiné à fixer un premier élément à un deuxième élément caractérisé en ce qu'il comporte au moins :
- une première partie destinée à maintenir en place le premier élément comprenant à une extrémité une partie plate et un filetage,
- une deuxième partie destinée à être insérée dans un orifice du deuxième élément comprenant au moins :
   - un élément creux ayant une paroi interne pourvue d'un filetage, un épaulement,
   - un fût coulissant ayant des dimensions extérieures adaptées aux dimensions de la paroi interne de l'élément creux et une paroi sur laquelle vient s'appuyer la partie, ledit fût comportant un épaulement adapté à l'épaulement de l'élément creux afin de maintenir le fût en place,
   - un moyen permettant de déplacer le fût coulissant dans l'élément creux sous l'effet de l'action de la première partie,
- ladite deuxième partie recevant un moyen de fixation du premier élément au deuxième élément.

Le moyen permettant de déplacer le fût coulissant est, par exemple, un ressort ayant des dimensions choisies en fonction du fût coulissant, le ressort est fixé par une première extrémité à un fond de la partie de fixation et une deuxième extrémité du ressort s'appuie sur la paroi du fût coulissant.

La deuxième partie peut être composée de deux chambres, l'épaulement étant situé entre les deux chambres.

Selon une autre variante, la deuxième partie comprend sur une partie de sa paroi externe un filetage adapté à maintenir ladite deuxième partie à l'intérieur d'un orifice.

L'invention concerne aussi un dispositif de fixation étanche caractérisé en ce qu'il comporte au moins un clapet d'étanchéité présentant au moins l'une des caractéristiques précitées et une première partie destinée à maintenir en place le premier élément, comprenant à une extrémité une partie plate et un filetage.

La première partie du dispositif comporte, par exemple, une molette et une poignée.

Le dispositif de fixation est utilisé pour maintenir en place un poste radio sur une embase de connexion.

D'autres caractéristiques et avantages du dispositif selon l'invention, apparaîtront mieux à la lecture de la description qui suit d'un exemple de réalisation donné à titre illustratif et nullement limitatif annexé des figures qui représentent :
- La figure 1A et la figure 1B, une vue d'ensemble d'un exemple d'utilisation du dispositif selon l'invention utilisé pour la connexion d'un connecteur sur un poste radio,
- La figure 2, une coupe d'un dispositif de fixation comprenant un clapet d'étanchéité selon l'invention,
- La figure 3, une vue du clapet d'étanchéité selon l'invention,
- Les figures 4A et 4B, une vue en coupe et de profil du fût coulissant.

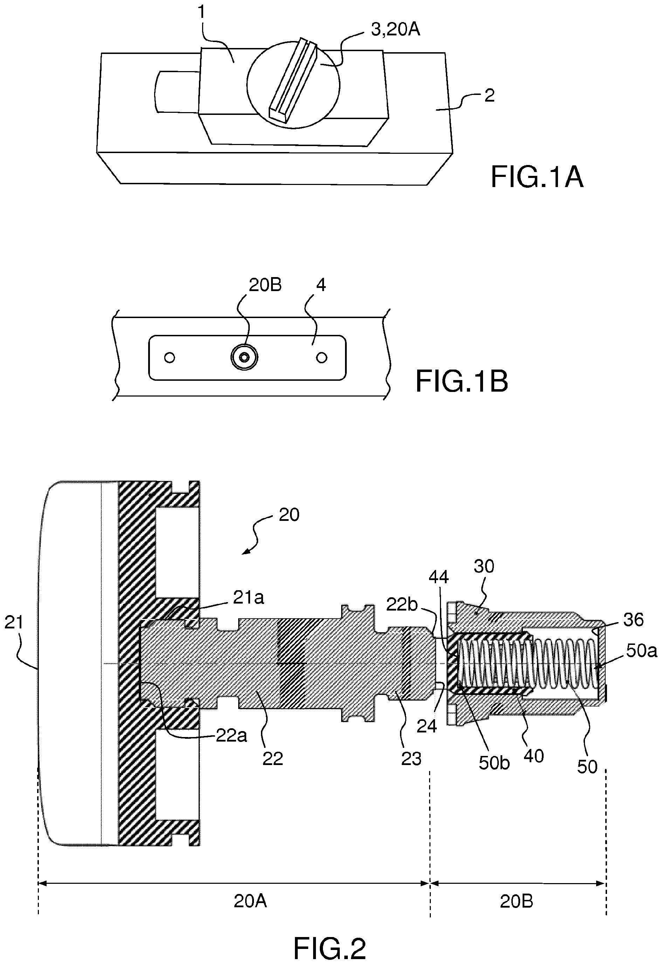

L'exemple qui suit à titre illustratif et nullement limitatif est donné dans le cas d'un connecteur latéral 1 devant être fixé sur un dispositif radio 2 tel qu'il est représenté à la figure 1A maintenu au moyen d'une molette de fixation 3. Le poste radio comprend une embase latérale 4 sur laquelle se monte un connecteur vissé par le biais de la molette de serrage. La figure 1 B schématise l'embase 4 et le clapet d'étanchéité selon l'invention décrit plus en détail aux figures 2 à 4B.

Le clapet d'étanchéité ou élément de protection selon l'invention présente l'avantage de ne pas dépasser de la surface du connecteur et de fait de ne pas augmenter les cotes hors tout

La figure 2 représente une vue de profil d'un dispositif de fixation 20 étanche composé d'une première partie 20A qui va venir se visser dans un clapet d'étanchéité 20B destiné à être inséré dans un orifice que l'on souhaite protéger. La pièce à maintenir en place est placée entre ces deux éléments et maintenue en place lorsque la partie 20A est vissée dans le clapet d'étanchéité 20B.

La première partie 20A du dispositif est constituée par exemple d'une poignée 21 dans laquelle vient s'insérer une première extrémité 22a d'une molette de fixation 22, par exemple dans une cavité 21a. Le maintien en place est réalisé dans cet exemple par vissage. La molette de fixation 22 est cylindrique et comprend au niveau d'une deuxième extrémité 22b une partie plate 24. La partie plate 24 s'appuie, par exemple, sur le plat du clapet d'étanchéité. En périphérie de la deuxième extrémité 22b un filetage 23 ou pas de vis permet de visser la molette dans le clapet d'étanchéité. Les pas de vis ou filetage sont adaptés en conséquence.

Le clapet d'étanchéité formant la deuxième partie 20B du dispositif de fixation vient s'insérer dans un côté du poste radio. Le clapet d'étanchéité comporte une pièce 30 qui permet la fixation de l'embase sur le poste, accueille un fut 40 coulissant et un ressort 50, dans cet exemple.

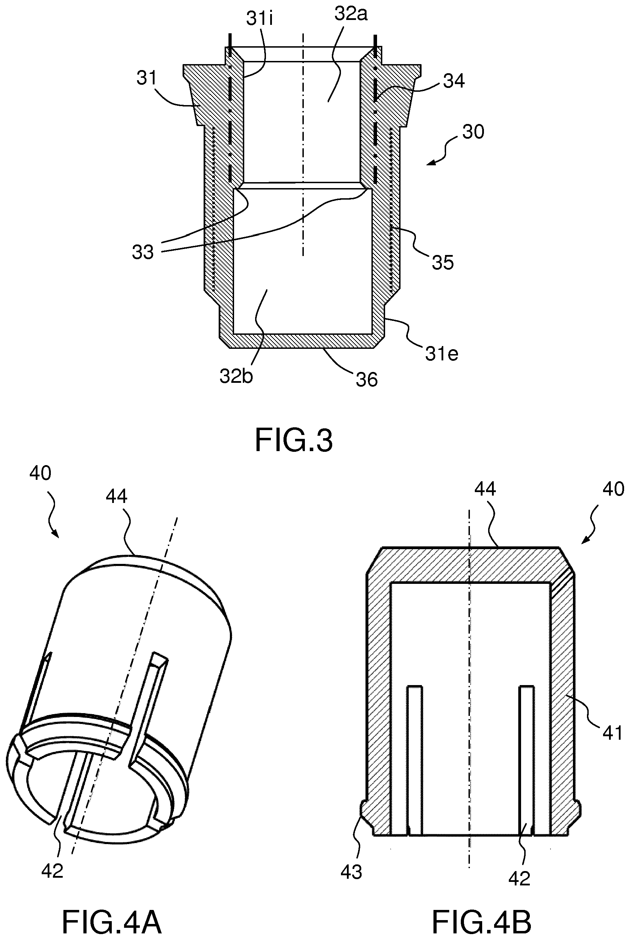

La figure 3 détaille la pièce 30 de fixation de l'embase 4 dans l'exemple de la figure 1. Elle est composée dans cet exemple d'une paroi 31 cylindrique, comprenant une première partie creuse 32a et une deuxième partie creuse 32b, ou chambres communiquant entre elles et un fond 36. A la jonction des deux chambres 32a, 32b, se trouvent un épaulement 33 ayant notamment comme fonction de maintenir le fût coulissant dans une position donnée, comme il va être explicité ci-après. La paroi 31 comporte sur sa partie interne 31i correspondant à la hauteur de la chambre 32a, par exemple, un filet de taraudage 34 ou filetage correspondant au filetage 23 situé sur la molette de fixation. La paroi 31 comporte sur sa partie externe 31e un filetage ou pas de vis 35 qui va permettre son maintien dans l'orifice dans lequel le dispositif vient s'insérer.

A la place du filetage 35 de la partie extérieure, il est possible d'utiliser un système alésé, un système à baïonnette, un alésage claveté servant à un accouplement pour une transmission d'effort ou tout autre moyen qui va permettre le maintien du clapet dans son réceptacle.

La figure 4A et la figure 4B sont deux vues de coupe et de profil du fût coulissant 40. Le fût coulissant dans cet exemple de réalisation est composé d'une paroi 41 cylindrique qui comporte un fond 44. Le fût coulissant 40 comporte par exemple des encoches 42 donnant une certaine flexibilité lorsque l'on introduit le fût coulissant 40 dans la pièce 30 de fixation de l'embase. Un épaulement 43 cylindrique est disposé à une extrémité 40 du fût afin de maintenir le fût et éviter qu'il ne sorte de la partie de fixation 30 lorsque la molette de fixation est en position non vissée. Le diamètre externe Dext du fût coulissant est choisi en fonction du diamètre interne Dint de la pièce de fixation 30, afin que le fût puisse coulisser avec un jeu suffisant pour que l'on puisse visser et dévisser la molette de fixation 22. Le fût est, par exemple, réalisé en polymère très dur.

La figure 2 schématise la présence d'un ressort 50 dont les dimensions géométriques sont choisies en fonction de la géométrie du fut coulissant. Le ressort est fixé par exemple par une première extrémité 50a au fond 36 de la partie de fixation. La deuxième extrémité 50b du ressort vient s'appuyer sur le fond 44 du fût coulissant. Les caractéristiques de raideur et de rigidité du ressort seront choisies afin de pouvoir faciliter l'action de visser et dévisser, et la mise en place du fût dans sa position d'étanchéité.

L'assemblage du fût coulissant se fait à force dans la partie de fixation 30. Le fût est poussé en permanence par le ressort.

Dans l'exemple donné pour le maintien d'un connecteur selon la figure 1, lorsque le connecteur n'est pas monté le fût est en position « haute » par opposition à une position « basse » dans laquelle le ressort est compressé vers le fond de la pièce 30 et assure l'étanchéité à la poussière, à l'eau, etc.

Lorsque l'on monte le connecteur, le pas de vis de la molette de fixation pousse le fût tandis le pas de vis de la molette se prend dans les filets du taraudage de la pièce de fixation 30. Lorsque la molette de fixation 22 est dans la partie de fixation 30, alors le plat de la molette appuie que le fond du fût coulissant, le fût est en position dite « basse ». Le ressort est comprimé, l'épaulement 43 du fût vient s'appuyer sur l'épaulement 33 de la partie de fixation.

Lorsque l'on desserre la molette de fixation, le ressort se détend et pousse le fût coulissant. Lorsque la molette de fixation est pratiquement dévissée, le fût assure la protection contre des infiltrations possibles de saletés ou d'eau, assurant ainsi une étanchéité à tous types d'éléments.

Le dispositif selon l'invention présente notamment une solution simple et peu onéreuse pour la protection de connectique, de fixation dans un environnement sale.

## Revendications

1. - Clapet d'étanchéité destiné à fixer un premier élément (1) à un deuxième élément (2) comportant au moins :
• une première partie (20A) destinée à maintenir en place le premier élément (1), comprenant à une extrémité (22b) une partie plate (24) et un filetage (23),
• une deuxième partie (20B) destinée à être insérée dans un orifice du deuxième élément (2) comprenant au moins :
• un élément creux (30) ayant une paroi interne (31i) pourvue d'un filetage (34), un épaulement (33),
• un fût coulissant (40) ayant des dimensions extérieures adaptées aux dimensions de la paroi interne de l'élément creux (30) et une paroi (44) sur laquelle vient s'appuyer la partie (24), ledit fût comportant un épaulement (43) adapté à l'épaulement (33) de l'élément creux afin de maintenir le fût en place,
• un moyen (50) permettant de déplacer le fût coulissant dans l'élément creux (30) sous l'effet de l'action de la première partie (20A),
• ladite deuxième partie (20B) recevant un moyen de fixation du premier élément (1) au deuxième élément.

2. - Clapet d'étanchéité selon la revendication 1 **caractérisé en ce que** le moyen (50) est un ressort ayant des dimensions choisies en fonction du fût coulissant, le ressort est fixé par une première extrémité (50a) à un fond (36) de la partie de fixation (30) et une deuxième extrémité (50b) du ressort s'appuie sur la paroi (44) du fût coulissant.

3. - Clapet d'étanchéité selon la revendication 1 **caractérisé en ce que** la deuxième partie (20B) est composée de deux chambres (32a), (32b), l'épaulement (33) étant situé entre les deux chambres.

4. - Clapet d'étanchéité selon l'une des revendications 1 à 3 **caractérisé en ce que** la deuxième partie (20B) comprend sur une partie de sa paroi externe un filetage (35) adapté à maintenir ladite deuxième partie à l'intérieur d'un orifice.

5. - Dispositif de fixation (20) étanche **caractérisé en ce qu'**il comporte au moins un clapet d'étanchéité selon l'une des revendications 1 à 4 et une première partie (20A) destinée à maintenir en place le premier élément (1), comprenant à une extrémité (22b) une partie plate (24) et un filetage (23).

6. - Dispositif selon la revendication 5 **caractérisé en ce que** la première partie (20A) du dispositif (20) comporte une molette et une poignée.

7. - Utilisation du dispositif de fixation selon l'une des revendications 5 ou 6 pour maintenir en place un poste radio sur une embase de connexion.

## Patentansprüche

1. Dichtungsventil zum Befestigen eines ersten Elements (1) an einem zweiten Element (2), das wenigstens Folgendes umfasst:
• einen ersten Teil (20A) zum Festhalten des ersten Elements (1), der an einem Ende (22b) eine Abflachung (24) und ein Gewinde (23) aufweist,
• einen zweiten Teil (20B) zum Einführen in eine Öffnung des zweiten Elements (2), der wenigstens Folgendes umfasst:
• ein hohles Element (30) mit einer Innenwand (31i), ausgestattet mit einem Gewinde (34) und einem Absatz (33),
• einen Gleitkolben (40) mit Außenabmessungen, die an die Abmessungen der Innenwand des hohlen Elements (30) angepasst sind, und eine Wand (44), an der der Teil (24) anliegen kann, wobei der Kolben einen Absatz (43) aufweist, der an den Absatz (33) des hohlen Elements angepasst ist, um den Kolben festzuhalten,
• ein Mittel (50), das das Verschieben des Gleitkolbens in dem hohlen Element (30) unter der Wirkung des ersten Teils (20A) zulässt,
• wobei der zweite Teil (20B) ein Mittel zum Befestigen des ersten Elements (1) an dem zweiten Element aufnimmt.

2. Dichtungsventil nach Anspruch 1, **dadurch gekennzeichnet, dass** das Mittel (50) eine Feder mit Abmessungen ist, die in Abhängigkeit von dem Gleitkolben gewählt werden, wobei die Feder mit einem ersten Ende (50a) an einem Boden (36) des Befestigungsteils (30) befestigt ist und ein zweites Ende (50b) der Feder sich an der Wand (44) des Gleitkolbens abstützt.

3. Dichtungsventil nach Anspruch 1, **dadurch gekennzeichnet, dass** der zweite Teil (20B) aus zwei Kammern (32a), (32b) zusammengesetzt ist, wobei sich der Ansatz (33) zwischen den zwei Kammern befindet.

4. Dichtungsventil nach einem der Ansprüche 1 bis 3, **dadurch gekennzeichnet, dass** der zweite Teil (20B) an einem Teil seiner Außenwand ein Gewinde (35) aufweist, das zum Halten des zweiten Teils im Innern einer Öffnung ausgelegt ist.

5. Vorrichtung zum dichten Befestigen (20), **dadurch gekennzeichnet, dass** sie wenigstens ein Dichtungsventil nach einem der Ansprüche 1 bis 4 und einen ersten Teil (20A) zum Festhalten des ersten Elements (1) umfasst, das an einem ersten Ende (22b) eine Abflachung (24) und ein Gewinde (23) umfasst.

6. Vorrichtung nach Anspruch 5, **dadurch gekennzeichnet, dass** der erste Teil (20A) der Vorrichtung (20) eine Rolle und einen Griff umfasst.

7. Verwenden der Befestigungsvorrichtung nach Anspruch 5 oder 6 zum Festhalten eines Radiogeräts an einem Einbaustecker.

## Claims

1. - A sealing valve intended to fix a first element (1) to a second element (2), comprising at least:
• a first portion (20A) intended to hold the first element (1) in place, comprising, at one end (22b), a flat portion (24) and a thread (23),
• a second portion (20B) intended to be inserted into an orifice in the second element (2), comprising at least:
• a hollow element (30) having an inner wall (31i) provided with a thread (34) and a shoulder (33),
• a sliding barrel (40) having external dimensions adapted to the dimensions of the inner wall of the hollow element (30) and a wall (44) on which the portion (24) bears, said barrel comprising a shoulder (43) adapted to the shoulder (33) of the hollow element in order to hold the barrel in place,
• a means (50) for moving the sliding barrel in the hollow element (30) under the effect of the action of the first portion (20A),
• said second portion (20B) receiving a means for fixing the first element (1) to the second element.

2. - The sealing valve as claimed in claim 1, **characterized in that** the means (50) is a spring having dimensions chosen as a function of the sliding barrel, the spring being fixed by a first end (50a) to an end wall (36) of the fixing portion (30) and a second end (50b) of the spring bearing on the wall (44) of the sliding barrel.

3. - The sealing valve as claimed in claim 1, **characterized in that** the second portion (20B) is composed of two chambers (32a), (32b), the shoulder (33) being situated between the two chambers.

4. - The sealing valve as claimed in one of claims 1 to 3, **characterized in that** the second portion (20B) comprises, over part of its outer wall, a thread (35) adapted to hold said second portion inside an orifice.

5. - A sealed fixing device (20), **characterized in that** it comprises at least one sealing valve as claimed in one of claims 1 to 4 and a first portion (20A) intended to hold the first element (1) in place, comprising, at one end (22b), a flat portion (24) and a thread (23).

6. - The device as claimed in claim 5, **characterized in that** the first portion (20A) of the device (20) comprises a knob and a handle.

7. - The use of the fixing device as claimed in either of claims 5 or 6 for holding a radio set in place on a connection base.
